# EUROPÄISCHE PATENTSCHRIFT

(11) **EP 1 959 765 B1**
(45) Veröffentlichungstag und Bekanntmachung des Hinweises auf die Patenterteilung: **01.07.2009**
(21) Anmeldenummer: 06805466.7
(22) Anmeldetag: 18.10.2006
(51) Int. Cl.: A23L 1/328, A23B 4/027

(54) **VERFAHREN ZUR AUFBEREITUNG DER OVULIERTEN EIER VON WASSERTIEREN ZU DELIKATESS-NAHRUNGSMITTELN UND MIT DEM VERFAHREN AUFBEREITETE OVULIERTE EIER**
METHOD FOR PREPARING THE OVULATED EGGS OF AQUATIC ANIMALS FOR QUALITY FOODSTUFFS AND OVULATED EGGS PREPARED USING SAID METHOD
PROCEDE DE PREPARATION DES OEUFS OVULES D'ANIMAUX AQUATIQUES POUR OBTENIR DES DENREES ALIMENTAIRES FINES ET OEUFS OVULES AINSI PREPARES

(30) Priorität: 19.10.2005 DE 102005050723
(43) Veröffentlichungstag der Anmeldung: 27.08.2008
(73) Patentinhaber: Stiftung Alfred-Wegener-Insitut für Polar- und Meeresforschung, 27570 Bremerhaven (DE)
(72) Erfinder: KÖHLER-GÜNTHER, Angela, 27574 Bremerhaven (DE)
(86) Internationale Anmeldenummer: PCT/DE2006/001867
(87) Internationale Veröffentlichungsnummer: WO 2007/045233

(56) Entgegenhaltungen:
- RU-C1- 2 236 159
- RU-C2- 2 232 523
- US-A- 5 389 657
- KAY E ET AL: "Assembly of the fertilization membrane of the sea urchin: isolation of a divalent cation-dependent intermediate and its crosslinking in vitro." CELL JUL 1982, Bd. 29, Nr. 3, Juli 1982 (1982-07), Seiten 867-875, XP002422376 ISSN: 0092-8674

## Beschreibung

Die Erfindung bezieht sich auf ein Verfahren zur Aufbereitung der ovulierten Eier von Wassertieren zu Delikatess-Nahrungsmitteln mit einer Erntung der ovulierten Eier ohne schädigenden Eingriff am Wassertier und einer Konservierung und auf mit dem Verfahren aufbereitete ovulierte Eier von Wassertieren zu Delikatess-Nahrungsmitteln.

Die aufbereiteten, stets unbefruchteten Eier von verschiedenen Wassertieren werden in der wohlhabenden Gesellschaft seit Langem als Delikatesse geschätzt und zunehmend konsumiert. Als Rogen werden die noch nicht natürlich abgelaichten, unreifen (in verschiedenen Stadien) Eier von Fischen bezeichnet. Der Rogen kann theoretisch von jedem weiblichen Fisch (oder Wassertier) stammen, dessen Eier nicht giftig sind. Dazu zählt auch der selbst bei sachgemäßer Zubereitung hochgiftige Kugelfisch Fugu. Aus dem Rogen vom Stör wird der so genannte "echte Kaviar" oder "Russische Kaviar" hergestellt. Hier wird zwischen Ossietra, Beluga und Sevruga Kaviar unterschieden. Neben den wilden Stören werden aber auch gezüchtete Störe zu Kaviargewinnung bereits genutzt. Der Rogen von beispielsweise Seehasen, dorschartigen Fischen und Heringen wird zur Herstellung von Kaviarersatz ("Deutscher Kaviar") verwendet. "isländischer Kaviar" wird aus dem Rogen vom Capelin hergestellt. Von Forellen wird der Forellen-Kaviar, von Lachsen der Lachs-Kaviar mit rötlicher Färbung gewonnen. Weiterhin wird auch Rogen von Seeigeln gewonnen. Schließlich sollen zu den hier genannten Wassertieren auch die Amphibien, beispielsweise Kröten und Unken, zählen, die sich durch Laichablage vermehren. Rogen wird meist gesalzen, manchmal auch geräuchert. Geräucherter Rogen wird aus dem in der unverletzten Hülle befindlichen Rogen durch Heißräuchern hergestellt. Er stammt in der Regel vom Kabeljau, einschließlich Dorsch, und Seelachs. Der Rogen vom Hummer, großen Flusskrebsen und anderen Krustentieren sowie der orangefarbene Rogensack der Jakobsmuschel werden als "Corail" bezeichnet.

Außer dem hohen Genusswert hat Kaviar noch andere wertvolle Eigenschaften. Kaviar ist reich an Eiweiß (25 bis 30 %) mit einem hohen Anteil essenzieller Aminosäuren. Mit 16% Fett ist er jedoch kein mageres Nahrungsmittel. Kaviar enthält die Vitamine D, E, B₁₂ und Niacin sowie die Mineralien Jod und Natrium. Darüber hinaus hat er einen hohen Anteil an gutem Cholesterin.

Bei dem am Markt derzeit erhältlichen Kaviar handelt es sich um den behandelten (Reinigen, Salzen) Rogen, der in unreifem Zustand aus den Eierstöcken von weiblichen Fischen entnommen wird, da hier die Eier eine ausreichende Festigkeit gegenüber weiteren Behandlungsschritten aufweisen. Um also Kaviar bester Qualität zu erhalten, werden die Eier bislang geerntet, bevor sie ihre maximale Reife (Ovulationsstadium) erreicht haben.

Ein erhebliches Problem bei der Kaviarherstellung beruht somit vor allem in der Gewinnung der Eier. Das Problem der Tötung von weiblichen Tieren zur Kaviargewinnung (z.B. Stören) besteht sowohl bei Wildfängen als auch in der Aquakultur (ca. 2500 t/Jahr weltweit). Zur Kaviar- und Rogengewinnung von verschiedenen Fischarten ist es seit Jahrhunderten üblich, die Tiere vor der Entnahme der Eier zu töten. Ein Hauptargument für die Tötung der weiblichen Individuen ist, z. B. beim Stör, dass die Eier in unreifem Zustand vor Erreichen des natürlichen Ovulationsstadiums geerntet werden, da die maximal im Körper des Muttertieres bis zur Ovulation herangereiften und damit befruchtungsfähigen Eier zu weich sind und bei der Konservierung durch Salz (Natriumchlorid) allein und in Kombination mit Borax platzen und zu einem ungenießbaren schleimigen Brei verkleben würden. Im Zuge der Ovulation, also dem Ausstoßen des Eies aus dem Follikel des Eierstocks, macht das Ei natürliche Veränderungen durch (Erweichung der Eimembran für die bevorstehende Befruchtung durch Spermien), die seine direkte Verwendung als Kaviar einschränken. Hinzu kommen noch osmotische Effekte, die später im Zuge des Einsalzens auftreten. Aus dem Stand der Technik bekannte Versuche mit mild gesalzenem Sterlett-Kaviar, der zu Testzwecken aus ovulierten (reifen) und nicht ovulierten (unreifen) Eiern hergestellt wurde, zeigten, dass die reifen Eier bereits bei leichter Berührung platzen und zu einer schmierig-breiigen Masse zerfließen. Gravierende geschmackliche Unterschiede waren jedoch nicht feststellbar.

Diese Praxis des Tötens zusammen mit einer drastischen Überfischung hat zur Bedrohung durch Aussterben der Wildbestände der etwa 30 verschiedenen Störarten geführt. In Russland wurde jetzt zwar eine neue Methode entwickelt, wie unreifer Rogen gewonnen werden kann, ohne den Fisch zu töten. Er wird unter Betäubung eine Art mehrfacher "Kaiserschnitt" an den Ovarien vorgenommen, die unreifen Eier herausgepresst und die Schnitte wieder geschlossen. Wenn diese dann verheilt sind, kann der Fisch wieder freigelassen oder in Zuchtstätten für spätere Kaviarentnahmen gehalten werden. Die Mortalitätsrate bei diesem sehr aufwändigen und den Fisch stark stressenden Verfahren liegt aber immer noch bei über 40%. Nach dem deutschen Tierschutzgesetz ist dieses Vorgehen außerdem verboten.

Weltweit sind kostenintensive Wiederbesiedlungsprogramme initiiert worden. Störe werden in der natürlichen Umgebung erst mit 8-12 Jahren das erste Mal geschlechtsreif, in der Aquakultur eher mit etwa 2-4 Jahren je nach Störart. Verschiedene Störarten aus der Aquakultur werden im Rahmen von Restaurationsprogrammen mit unterschiedlichem Erfolg ins Freiland entlassen, um die vom Aussterben bedrohten Bestände zu retten. Während für die Zucht die weiblichen Tier am Leben bleiben und die Eier durch Abstreifen gewonnen werden, stellt sich für die Kaviarproduktion in der Aquakultur ebenfalls das Problem der Tötung der weiblichen Tiere aus oben genannten Gründen.

Hohe kommerzielle Verluste sind aber auch für die Zucht von Larven und Fingerlingen für die Aquakultur und für Besatzmaßnahmen in Betracht zu ziehen, da die Weibchen eine erheblich verbesserte Reproduktionsleistung mit zunehmendem Alter zeigen.

Wichtig für die Qualität des Kaviars ist dessen Aufbereitung nach der Erntung. Mildes Salzen macht ihn haltbarer. Qualitativ hochwertiger Kaviar wird gerade so viel gesalzen, wie es für die begrenzte Haltbarkeit notwendig ist. Ein mit "Malossol" gekennzeichneter Kaviar darf einen Salzgehalt von höchstens 2,8 bis 4 % aufweisen. Der natürliche Geschmack bleibt bei Malossol Kaviar weitgehend erhalten. Neben dem Malossol Kaviar gibt es noch den lange haltbaren Fass- oder Salzkaviar, der mit etwa 10-12 % Kochsalz gemischt ist. Frischer Kaviar ist sehr temperaturempfindlich und daher schwer zu lagern und zu servieren. Die traditionelle Verpackungsform ist die luftdichte, innen beschichtete Dose für den nur gesalzenen, aber nicht erhitzten Kaviar. Pasteurisierter, durch kurzes Erhitzen auf 60°C haltbar gemachter Kaviar wird in Schraubgläsern und Ring-Pull-Dosen geliefert und ist ungeöffnet ein Jahr haltbar.

Ein Problem bei der Lagerung von frischem Kaviar ist die Vermehrung von auftretenden Bakterien, die zu schneller Produktverderblichkeit führt. Bei der Pasteurisation hingegen verliert der Kaviar durch die Wärmebehandlung an Körnigkeit und Geschmack. Ein weiteres Problem bei der Lagerung von Kaviar und anderen Rogenprodukten ist die Auskristallisation von Tyrosin-Molekülen, welche in den Eiern als nichtessenzielle Aminosäure gelagert werden. Durch diese Auskristallisation wird das Produkt unverkäuflich. Des Weiteren besteht auch ein Problem bei der Verarbeitungsgeschwindigkeit des gewonnenen Rogens. Zwischen der Erntung der Eier vom Weibchen und der Abfüllung des Kaviars in Dosen dürfen bislang nicht mehr als 10 Minuten vergehen, sonst verderben die Eier.

Für jeden Schritt der Aufbereitung (Konservierung, Pasteurisation u.a.) nach der Erntung der Eier ist es aber zwingend notwendig, dass die geernteten Eier diese überstehen ohne zu platzen, da ein Platzen der Eier zu einem nicht zu heilenden Qualitätsverlust und damit zu einer Unbrauchbarkeit des Produkts führt.

### Stand der Technik

Aus der JP 60091934A ist ein Verfahren zur Herstellung von verpacktem Heringsrogen bekannt, bei dem der geerntete Heringsrogen, der in unreifem Stadium dem zuvor getöteten Heringsweibchen entnommen wurde, nach einer Konservierung mit Salz zur Rogenverfestigung mit einer Lösung aus Wasserstoffperoxid und Salz antibakteriell behandelt wird. Durch eine sofortige Blutentfernung des geernteten Heringsrogens kann die Konzentration des einsetzten Wasserstoffperoxids verringert werden, was zu einer Geschmacksverbesserung des Heringsrogens führt. Nach der Wasserstoffperoxid-Salz-Behandlung wird eine Katalasebehandlung zur Entfernung des Oxiradikals Wasserstoffperoxids durchgeführt. Die sofortige Entfernung des noch ungeronnenen Bluts kann aber nur direkt nach der Tötung des Fisches oder kurz vor dem Auftauende des direkt nach der Tötung eingefrorerenen Fisches erfolgen. Da die sofortige Entfernung am frisch getöteten Fisch aber nur sehr aufwändig durchzuführen ist, werden die Fische in der Regel zunächst gefroren, was aber wiederum zu einem Qualitätsverlust führt.

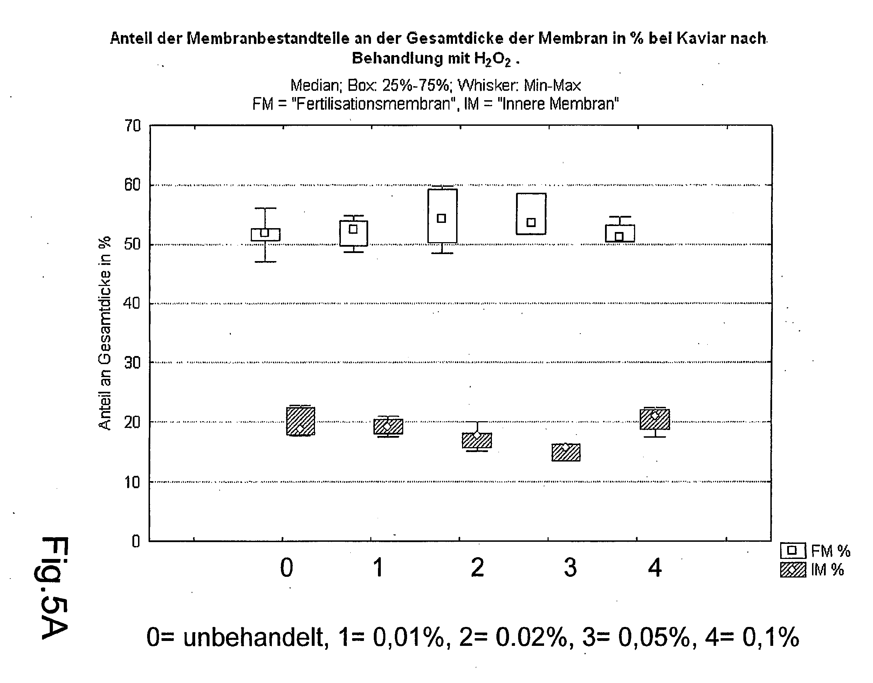

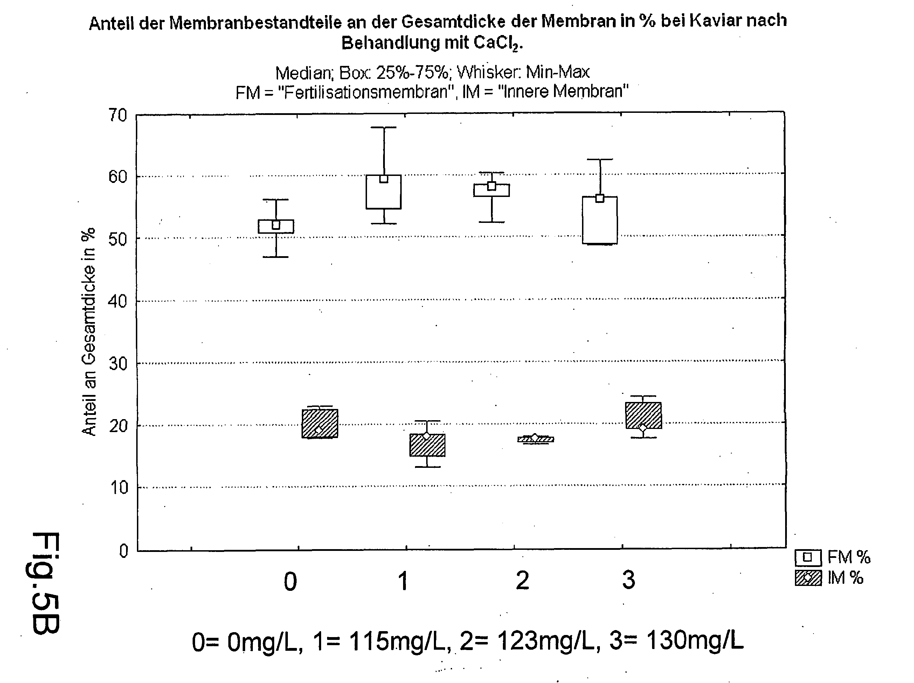

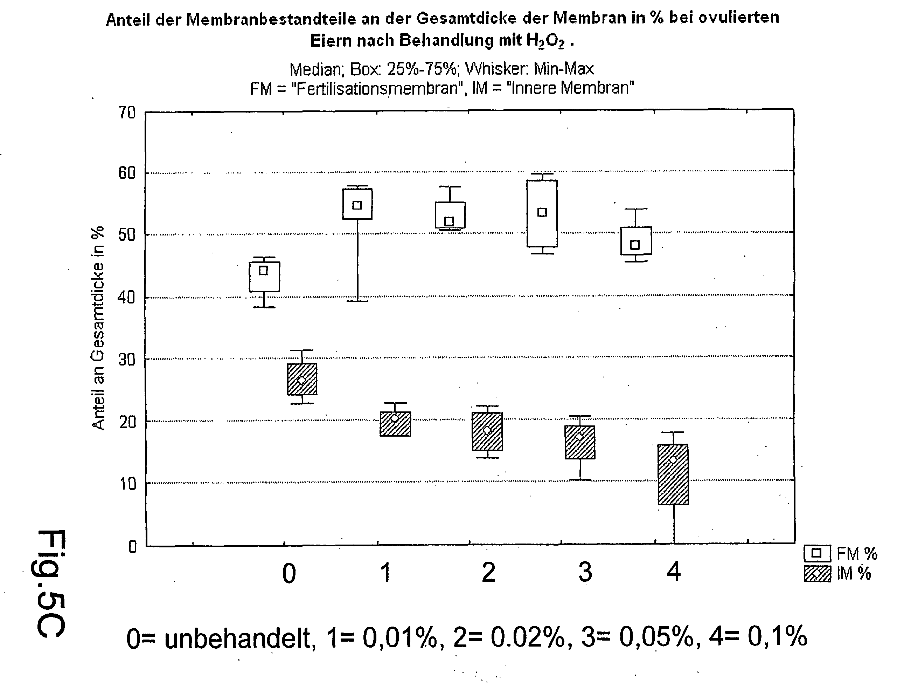

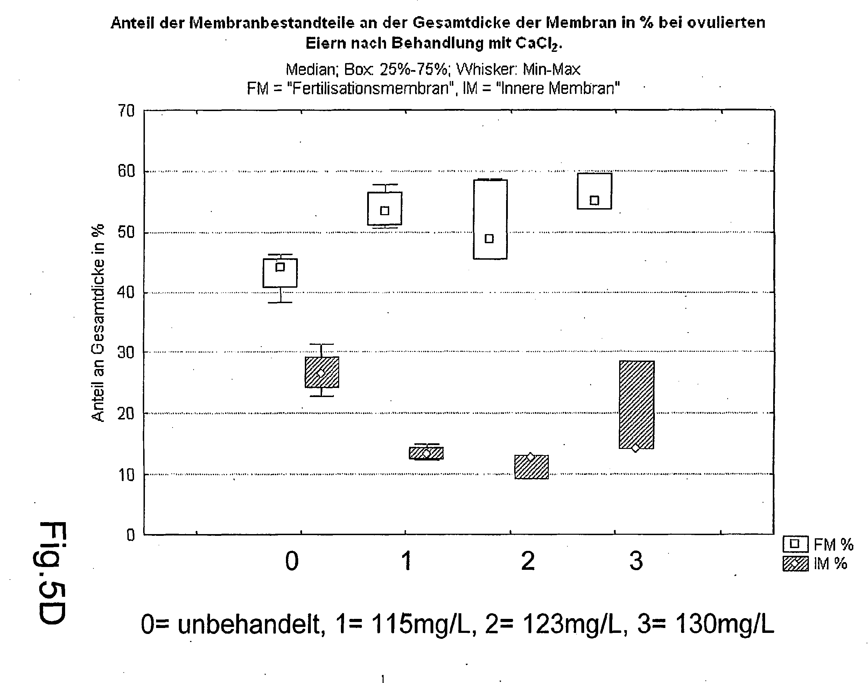

Weiterhin ist es aus dem Stand der Technik bekannt, dass die Anwendung von Tanninsäure ein erprobtes Mittel in der Aquakultur in der Gewinnung von Brutfischen ist. Die befruchteten Eier werden mit einer Tanninsäure-Lösung behandelt, um die klebrige Gelschicht zu entfernen. Dadurch können bei der Erbrütung die Eier besser desinfiziert werden und ein Pilz und Bakterienbefall während der Ei-Inkubation reduziert werden. Diese Behandlung ist Standard für verschiedene Fischarten wie Seebarsch einschließlich des Störs (vergleiche **Veröffentlichung** I von Mizuno et al.: "Elimination of adhesiveness in the eggs of shishamo smelt Spirinchus lanceolatus using kaolin treatment to achieve high hatching rate in environment with a high iron concentration", Aquaculture 242 (2004) pp 713-726). Tanninsäure, ein Polyphenol, ist die kommerzielle Form des Tannins. Seine Struktur basiert auf den Glucoseestern der Gallsäuren. Tanninsäure wird als Holzfärbemittel benutzt und ist natürlicherweise in Eiche, Walnuss, Mahagoni und Sequoia-Bäumen als Brandschutz vorhanden. Ebenfalls kann der Veröffentlichung I (Figur 5) entnommen werden, dass durch eine Behandlung mit Tanninsäure ein höherer Eidruck bis zum Platzen erreicht werden kann. Allerdings ist es bekannt, dass durch die Behandlung mit Tanninsäure die Eimembran gummiartig zäh und damit nicht mehr für den Verzehr geeignet ist.

Aus der RU 2 126 218 C1 ist ein Verfahren zur Einfärbung bekannt, bei dem ovulierter Rogen mit schwacher natürlicher Färbung, insbesondere auch von gegenüber dem Stör "minderwertigen" Fischgattungen, in zwei Stufen mit einem Abstand von mindestens 0,5 h gefärbt und eingesalzen wird. In der ersten Stufe werden dem Rogen 2/3 des Färbemittels unmittelbar zugesetzt und in der zweiten Stufe wird der verbleibende Anteil des Färbemittels zusammen mit einer Fett-Protein-Emulsion in einer Menge von 5 bis 10 % bezogen auf die Masse des Rogens eingebracht. Das Einsalzen erfolgt vor der zweiten Färbestufe. Es kann bei diesem Verfahren somit nicht ausgeschlossen werden, dass der ovulierte Rogen nach dem Zusetzen des Färbemittels in der ersten Stufe beim nachfolgenden Salzen platzt. Das Aufbringen der Fett-Protein-Emulsion erfolgt nach dem Einsalzen und dient der stabilen Färbung sowie der Verbesserung der organoleptischen Merkmale und der Strahlungsschutzeigenschaften des Rogens.

Aus der RU 2 232 523 C2, von der die vorliegende Erfindung als nächstliegendem Stand der Technik ausgeht, ist eine Methode zur Produktion von granularem Kaviar aus ovulierten Störrogen bekannt. Hierbei werden die geernteten ovulierten Eier zunächst in einer heißen 1,5-2% wässrigen Lösung eines Konservierungsstoffes behandelt, um sie für eine nachfolgende Pasteurisierung, bei Temperaturen von 65-70°C vorzubereiten. Abgesehen von der Tatsache, dass jeder Erhitzungsvorgang den Geschmack des Rogens bedeutsam beeinflusst, ist es bei der Verwendung von ovulierten Eiern, die bekanntermaßen eine sehr weiche Eimembran besitzen, nicht sicher gewährleistet, dass diese die nachfolgenden Behandlungen mit Konservierungsmitteln ohne Platzen überstehen. Aber schon ein geringer Anteil von geplatzten Eiern verschlechtert die Qualität des Kaviars bedeutsam, da die geplatzten Eier nur schwer zu entfernen sind. Von besonderem Vorteil ist aber bei der Verwendung von ovulierten Eiern die Tatsache, dass die Tiere zur Erntung weder getötet noch stark stressend operativ behandelt werden müssen.

Nach dem Wissen und den Verarbeitungstechnologien im Stand der Technik wird somit derzeit davon ausgegangen, dass sich aus reifen (ovulierten) Störeiern kein vollwertiger Kaviar herstellen lässt, da natürlich herangereifte Eier aufgrund der erwarteten Fertilisation zu weich sind und bei einer Berührung mit Salz oder anderen Konservierungsstoffen sofort platzen. Die genannten Methoden zur Kaviargewinnung aus ovuliertem Rogen erbringen keine zufrieden stellenden Ergebnisse.

### Aufgabenstellung

Daher soll als **Aufgabe** für die Erfindung ein gattungsgemäßes Verfahren angegeben werden, das die frisch vom lebenden Wassertier geernteten ovulierten Eier so aufbereitet, dass sie ohne Qualitätsverlust, insbesondere ohne zu platzen, zu vollwertigen Delikatessnahrungsmitteln weiterverarbeitet werden können und somit eine vermarktungs- und konkurrenzfähige Qualität erreichen. Mit dem Verfahren soll insbesondere eine geringere Empfindlichkeit der Eier bei der Verarbeitung und eine bedeutsam längere Haltbarkeit auch ohne starke Konservierungsmethoden erreicht werden. Weiterhin soll das Verfahren aber einfach und kostengünstig anwendbar und so gestaltet sein, dass es am fertigen Produkt auch nachweisbar ist.

Die erfindungsgemäße **Lösung** ist im Verfahrensanspruch aufgezeigt und umfasst folgende Verfahrensschritte:
- Erntung der ovulierten Eier ohne schädigenden Eingriff am Wassertier,
- exogene Behandlung der frisch geernteten, ovulierten Eier in einer wässrigen Lösung mit einer Zugabe von zumindest einem in der Eizelle auch natürlich vorkommenden Signaltransduktions-Molekül (H₂O₂ und/oder CaCl₂) zur physiologischen Stabilisierung der Eimembran durch Ovoperoxidase-Aktivierung und nachfolgend
- Konservierung.

Vorteilhafte Weiterbildungen des Verfahrens werden in den Unteransprüchen aufgezeigt und im Folgenden im Zusammenhang mit der Erfindung näher erläutert. Weiterhin ist in dem Erzeugnisanspruch aufgezeigt, dass die nach dem Verfahren nach der Erfindung aufbereiteten, ovulierten Eier eine ausgehärtete extrazelluläre Außenhaut mit vernetzten Proteinsträngen und irreversibel eingebauten Tyrosin-Molekülen aufweisen. Eine derartige Molekülstruktur tritt in der Natur an unbefruchteten Eiern nicht auf. Ein derartiges, künstlich hergestelltes Produkt existiert bislang im Stand der Technik nicht.

Bei dem erfindungsgemäßen Verfahren werden die ovulierten Eier, also die für die Befruchtung voll ausgereiften Eier (Laich), von den ruhig gestellten Wassertieren, vornehmlich Stören, durch natürliche Entlassung der ovulierten Eier aus der Körperöffnung und einfaches Abstreifen geerntet. Die Stressbelastung für die Tiere ist somit minimiert und belastet sie kaum. Die frisch geernteten, ovulierten Eier werden vor der Konservierung exogen mit einem in der Eizelle auch natürlich vorkommenden Signaltransduktions-Molekül behandelt. Dadurch wird das Enzym Ovoperoxidase aktiviert, das eine Bildung und Aushärtung einer extrazellulären Außenhaut und damit eine physiologische Stabilisierung der Eimembran einleitet. Als einprägsamer Name für das Aushärtungsverfahren nach der Erfindung kann daher die Bezeichnung "OVOHARD" verwendet werden. Durch die Behandlung der ovulierten Eier mit zumindest einem in der Eizelle auch natürlich vorkommenden Molekül, welches ansonsten im normalen Zellstoffwechsel nur in geringen Konzentrationen gebildet wird, ist eine absolut unschädliche und lebensmittelrechtlich unbedenkliche Behandlungsmöglichkeit zur-Aushärtung der Eier gefunden worden. Dabei wird mit dem erfindungsgemäßen Verfahren durch einfache Applikation einer natürlichen Substanz eine künstlich eingeleitete Nachhärtung der gewonnenen Eier bewirkt, die die ovulierten Eier bedeutsam weniger empfindlich gegen eine weitere Behandlung, vor allem während der Konservierung und Abfüllung, aber auch bei der Lagerung und Umpackung, machen. Ein weiterer Vorteil dieser künstlichen Nachhärtung ist eine bessere Haltbarkeit und damit Vermarktung der gewonnenen Eier, da die Entstehung von Tyrosin-Kristallen während der Lagerung vermieden wird. Durch die Aktivierung von Ovoperoxidase kommt es zur Vernetzung von Proteinsträngen und dem irreversiblen Einbau von Tyrosinen in einer undurchdringlichen Membran und somit zur Vermeidung von Kristallbildung. Des Weiteren wirkt die Behandlung bakterizid, wodurch sich die Haltbarkeit des Produktes erheblich verlängert.

Das erfindungsgemäße Verfahren besteht in einer äußeren Behandlung der frisch geernteten ovulierten Eier mit zumindest einem in der Eizelle auch natürlich vorkommenden Molekül, das in der Signaltransduktionskette, welche die Aushärtung der Membran bei einer natürlichen Fertilisation einleitet, eine Schlüsselrolle spielt. Hierbei handelt es sich insbesondere um Kalziumionen (Ca⁺⁺), welche in einer Welle nach einem exogenen Reiz durch das Ei strömen und zur Enzymaktivierung führen. Außerdem existiert zumindest ein weiteres Schlüsselmolekül. Hierbei handelt es sich um das von der NADPH abhängigen Oxidase gebildete Molekül Wasserstoffperoxid H₂O₂. Wasserstoffperoxid initiiert in geringsten mikromolaren Konzentrationen die natürliche, endogen bedingte Bildung einer festen Befruchtungsmembran um das Ei. Kalziumionen (Ca⁺⁺) liegen in der unbefruchteten Eizelle in so genannten Kalziumspeichern, den Mitochondrien und dem endoplasmatischen Retikulum, vor, kann aber auch durch Einstrom von Außen über spezifische Rezeptoren in die Zelle gelangen. Durch diese Kalziumwelle kommt es zur Freisetzung von Enzymen aus den innerzellulären Speichern, in denen sie in inaktiver Form lagern. Diese Enzyme (z.B.Glukose-6-Phosphat - Dehydrogenase) wiederum produzieren NADPH. NADPH bezeichnet die im Anabolismus bedeutende phosphorylierte Form von NADH, welches durch Addition eines Hydridions aus NAD (Nicotinamid-Adenin-Dinucleotid) entsteht. NADPH-Oxidase produziert Wasserstoffperoxid, welches wiederum das Substrat für die Ovoperoxidase ist, die für die Aushärtung der Eimembran verantwortlich ist

In der Natur befindet sich das unbefruchtete, ovulierte Ei in einem Ruhezustand, bevor es bei der natürlichen Befruchtung von einer Vielzahl von Spermien bombardiert wird. Alle Spermien außer dem einen, das mit dem Ei fusioniert, müssen zurückgehalten werden. Bei der natürlichen Befruchtung wird Sekunden nach dem Eindringen eines Spermas die Eimembran ausgehärtet, um eine für den Embryo tödliche Mehrfach- Befruchtung durch mehrere Spermien (Polyspermie, Ausnahme geringe Mehrfachbefruchtung, die zu eineiigen Mehrlingsgeburten führt) zu verhindern. Der entstehende Embryo bewältigt diese Aufgabe, indem er innerhalb von Sekunden eine extrazelluläre Außenhaut ausbildet, die für weitere Spermien undurchdringbar ist. Außerdem wird der Embryo gegen mechanische Schädigung und Giftstoffe geschützt. Das Schlüsselenzym für diesen Vorgang ist die Ovoperoxidase, welche in Granula (Cortical granules) unter der Eimembran in Wartestellung bereitsteht Im Moment der Fertilisation wird der oben beschriebene Reaktionsablauf in Gang gesetzt. Durch die produzierte Ovoperoxidase kommt es zur Vernetzung von Proteinsträngen und den irreversiblen Einbau von den Vorgang stimulierender Tyrosin-Kinase in einer undurchdringlichen extrazellulären Membran, welche den Embryo schützt. Dieser Mechanismus ist im gesamten Tierreich von Invertebraten wie Seeigeln und Vertebraten wie Fischen, Mäusen und Menschen zum Schutz der Embryonen verbreitet (vergleiche beispielsweise **Veröffentlichung II** von La Fleur et al.: "Searching ovoperoxidase: oocyte specific member of a heme dependent peroxidase superfamily that functions to stop polyspermy", Mechanisms of Developments 70 (1998), pp 77-89 und **Veröffentlichung III** von Wessel et al.: "The Biology of Cortical Granules" Int. Rev. Cytol. 209 (2001), pp 117-206).

In der **Veröffentlichung IV**: "Conformational Control of Ovoperoxidase Catalysis in the Sea Urchin fertilization Membrane" von T.L. Deits et al. (Journal of Biological Chemistry, Vol. 261, No.26, lssue of September 15, pp. 12159-12165, 1966) und der **Veröffentlichung V** "Release of ovoperoxidase from sea urchin eggs hardens the fertilization membrane with tyrosine crosslinks" von Ch.A. Foerder et al. (Proc. Natl. Acad. Sci. Vol. 74, No.11, pp 4214-4218, October 1977, Biochemistry) wurde grundlegend und erstmalig mit chromatographischen Verfahren festgestellt, dass und wie es zur Vernetzung von Tyrosin und zur Aushärtung der Membran kommt. Es wird weiter analysiert, dass Tyrosin (-reste) bei dem Aushärtungsprozess eine wichtige Rolle spielt. Durch spezifische Inhibitoren von Peroxidasen wurde herausgefunden, dass die (Ovo-) Peroxidase offenbar eine wichtige biologische Rolle bei der Tyrosinvernetzung und damit bei der Aushärtung der Membran spielt.

Auf der Basis des vorbeschriebenen zellbiologischen Phänomens wurde bei dem erfindungsgemäßen Verfahren die exogene Applikation von zumindest einem in der Eizelle auch natürlich vorkommenden Signaltransduktions-Molekülen zur Aushärtung der Eimembran ohne den Einsatz von Spermien entwickelt. Dabei handelt es sich bei den Signaltransduktions-Molekülen um das Oxiradikal Wasserstoffperoxid H₂O₂ oder um eine Kalziumchloridlösung CaCl₂ zur Bereitstellung von Kalziumionen. Ein gemeinsamer Einsatz beider Signaltransduktions-Moleküle ist möglich, da er die Aushärtung der Eimembran den natürlichen Vorgang am meisten nachahmt und auf diese Weise ein individuelles Produktdesign, insbesondere bezüglich des Härtegrades der behandelten Eier, je nach Vermarktungsstrategie möglich ist. Die exogene Applikation und das Eindringen der künstlich zugeführten Signaltransduktions-Moleküle in das unbefruchtete, ovulierte Ei nach der Erfindung simuliert die Signal-Transduktions-Kaskade der natürlichen Fertilisation, und es kommt zur Bildung einer festen extrazellulären Außenhaut der unbefruchteten ovulierten Eier.

Die mit dem Verfahren nach der Erfindung erreichte gleichmäßige Aushärtung aller Eier nimmt mit der Dauer der Behandlung von 1 Minute bis 20 Minuten zu. Der Härtegrad kann somit über die Behandlungsdauer individuell eingestellt werden. Dagegen zeigt die zugeführte Konzentration der in der Eizelle auch natürlich vorkommenden Signaltransduktions-Moleküle bei niedrigeren Konzentrationen die stärkste Wirkung auf den Aushärtungsgrad, (vergleiche Figur 5 C für H₂O₂). Dies ist plausibel, da die natürlichen Konzentrationen der Signaltransduktions-Moleküle in der Zelle ebenfalls im nano - und mikromolaren Bereich wirken. Besonders vorteilhaft kann die Behandlung der frisch geernteten Eier mit dem Verfahren nach der Erfindung in einem Wasserbad mit einer 0,01 % - 0,02% Zugabe von Wasserstoffperoxid und/oder Kalziumionen in Form von Kalziumchlorid CaCl₂ für fünf Minuten erfolgen. Beide Signaltransduktions-Moleküle können einzeln, aber auch in Kombination eingesetzt werden.

Nach der Erntung können die aufzubereitenden, unbefruchteten ovulierten Eier zunächst in physiologischer Kochsalzlösung vor einer Berührung mit Wasser gespült werden, um ein vorzeitiges Verkleben zu verhindern und die Verarbeitbarkeitszeit der frischen Eier zu verlängern. Dabei erfolgt der Spülschritt bevorzugt unter sterilen Bedingungen. Anschließend werden die steril gewaschenen Eier einfach in ein entsprechendes Bad mit den jeweils in der Verfahrensentwicklung bestimmten Konzentrationen an Wasserstoffperoxid und/oder Kalziumchlorid gegeben und nach Ablauf der Einwirkzeit herausgesiebt. Es handelt sich bei der Erfindung also um ein sehr einfaches, schnelles und dabei auch noch kostengünstiges Verfahren. Vorteilhaft ist hier auch die geringe Konzentration der eingesetzten Chemikalien, die nur geringste benötigte Mengen bedingt, was sich wiederum positiv auch auf den Geschmack der behandelten ovulierten Eier auswirkt. Wasserstoffperoxid zerfällt in Wasser und Sauerstoff und ist deshalb geschmacklos. Kalzium ist in allen tierischen und pflanzlichen Zellen vorhanden und schmeckt nur in sehr hohen Konzentrationen, die aber bei der Erfindung nicht zur Anwendung kommen, etwas kalkig.

Das erfindungsgemäße Verfahren wird grundsätzlich auf unbefruchtete, ovulierte Eier (Laich) des jeweiligen Wassertiers angewendet. Dabei wird natürlich die Erntung von einem lebenden Wassertier bevorzugt, um dessen Art nicht zu gefährden. Ebenso ist aber auch eine Gewinnung am getöteten oder toten Wassertier möglich. Der Vorteil hierbei ist, dass die Eier aus Wildfängen oder auch aus der Aquakultur, selbst wenn sie in der Reifung zum Ovulationsstadium fortgeschritten sind, noch verarbeitet werden können. Derzeit wird in der Verarbeitungsindustrie der Rogen, der sich schon im Stadium der Ovulation befindet, ungenutzt entsorgt, was einen nicht unerheblichen wirtschaftlichen Verlust bedeutet. Zum einen kann so der Laich von aus anderen Gründen (beispielsweise Verzehr) getöteten Wassertieren genutzt werden, zum anderen muss kein Wassertier mehr umsonst getötet werden, wenn sich herausstellt, dass sich seine Eier bereits im Ovulationsstadium befinden (bislang wurden diese Eier als unbrauchbar ungenutzt entsorgt). Auch wird durch das Verfahren nach der Erfindung durch die vernetzte, stabile Einlagerung von Tyrosin in die verfestigte Eimembran dessen Auskristallisation während der Lagerung verhindert, wodurch eine wesentliche Produktverbesserung und häufig sogar eine Produktrettung erreicht wird. Weiterhin weist das Verfahren nach der Erfindung bakterizide, keimtötende Eigenschaften auf, wodurch die Haltbarkeit der ovulierten Eier an sich und der daraus hergestellten Delikatess-Nahrungsmitteln wesentlich verbessert.

Der Hauptvorteil des Verfahrens nach der Erfindung ist aber darin zu sehen, dass es damit erstmalig möglich ist, die ausgereiften ovulierten Eier von Fischen und anderen Wassertieren im Ovulationsstadium als Kaviar zu verarbeiten. Die Eier werden durch Abstreifen eingesammelt, sie können aber auch mechanisch oder mittels einer Pumpvorrichtung gewonnen werden, sodass die weiblichen Tiere am Leben bleiben. Neben der Bestandserhaltung gefährdeter Arten besteht ein Vorteil auch in der Erhaltung reproduktionsfähiger Weibchen, worin ein erheblicher wirtschaftlicher Vorteil für die Aquakultur erreicht wird. Bei mehrmaliger Erlangung des Fortpflanzungsstadiums erhöhen sich die Rogengewinnung und der Reproduktionserfolg (Rate lebensfähiger Embryonen) bedeutsam.

Das Verfahren nach der Erfindung kann auf jede Eiart von im und am Wasser lebenden Tieren einfach und problemlos angewendet werden und damit insbesondere auch zum Erhalt seltener Tierarten beitragen. Einen besonderen wirtschaftlichen Vorteil bringt es natürlich bei der Herstellung von Kaviar aus Störeiern und bei der Herstellung von Corail aus Hummereiern. Durch die durch Anwendung des Verfahrens nach der Erfindung erfolgte Aushärtung der geernteten ovulierten Eier wird zudem eine zuverlässige Konservierung der Eier, beispielsweise mit Natriumchlorid oder Borax, ermöglicht. Auch ist es problemlos möglich, die Eier zu räuchern, In keinem Fall mehr muss mit einem Platzen der Eier gerechnet werden, was die Produktqualität wesentlich steigert. Des Weiteren kann Kaviar in verschiedenen Härtegraden durch die Variationen der Behandlungszeiten/Konzentrationen und in Kombination mit Salz und/oder Borax produziert und damit den organoleptischen Geschmacksanforderungen der jeweiligen Verbraucherkreise angepasst werden.

Durch die Anwendung des Verfahrens nach der Erfindung werden die gewonnenen ovulierten Eier signifikant in Bezug auf die Morphologie der ausgehärteten Eimembran verändert. Insbesondere kann von einem Fachmann mit Hilfe der Lichtmikroskopie und im Detail mit der Elektronenmikroskopie einfach und eindeutig eine ausgehärtete extrazelluläre Außenhaut mit vernetzten Proteinsträngen und irreversibel eingebauten Tyrosin-Molekülen identifiziert werden. Dieses Erscheinungsbild tritt in natürlichen, konventionell behandelten Eiern von Wassertieren nicht auf. Eine ausgehärtete Eizelle kann immer nur im Zusammenhang mit einer erfolgten Befruchtung und damit mit der Anwesenheit zumindest eines Spermiums in der befruchteten Eizelle auftreten. Somit kann die Anwendung des Verfahrens nach der Erfindung auch zweifelsfrei am fertigen, unbefruchteten Produkt nachgewiesen werden.

### Ausführungsbeispiele

Ausbildungsformen des Verfahrens zur Aufbereitung der Eier von Wassertieren zu Delikatess-Nahrungsmittelwerden nach der Erfindung werden nachfolgend anhand der Figuren näher erläutert. Dabei zeigt:
- **Figur 1**: den natürlichen Aushärtungsvorgang an Seeigeleiern,
- **Figur 2**: die Auswertung einer Zeitraffer-Mikroskopie der NADPH- Produktion bei Anwendung des Verfahrens nach der Erfindung,
- **Figur 3a**: ein unbehandeltes ovuliertes Ei des Seeigels,
- **Figur 3b**: ein behandeltes ovuliertes Ei des Seeigels,
- **Figur 4A**: Aufnahmen von Ultradünnschnitten durch die Eimembran eines unbehandelten ovulierten Störeies,
- **Figur 4B**: Aufnahmen von Ultradünnschnitten durch die Eimembran eines unbehandelten ovulierten Störeies nach einer Behandlung mit Kalziumchlorid,
- **Figur 4C**: Aufnahmen von Ultradünnschnitten durch die Eimembran eines unbehandelten ovulierten Störeies nach einer Behandlung mit Wasserstoffperoxid,
- **Figuren 5A,B**: Diagramme der Messungen zu den Anteilen der Membranbe- standteile an der Gesamtdicke der Membran in % von nach der Erfindung behandelten unreifen Störeiern (Kaviar) und
- **Figuren 5C,D**: Diagramme der Messungen zu den Anteilen der Membranbe- standteile an der Gesamtdicke der Membran in % von nach der Erfindung behandelten ovulierten Störeiern.

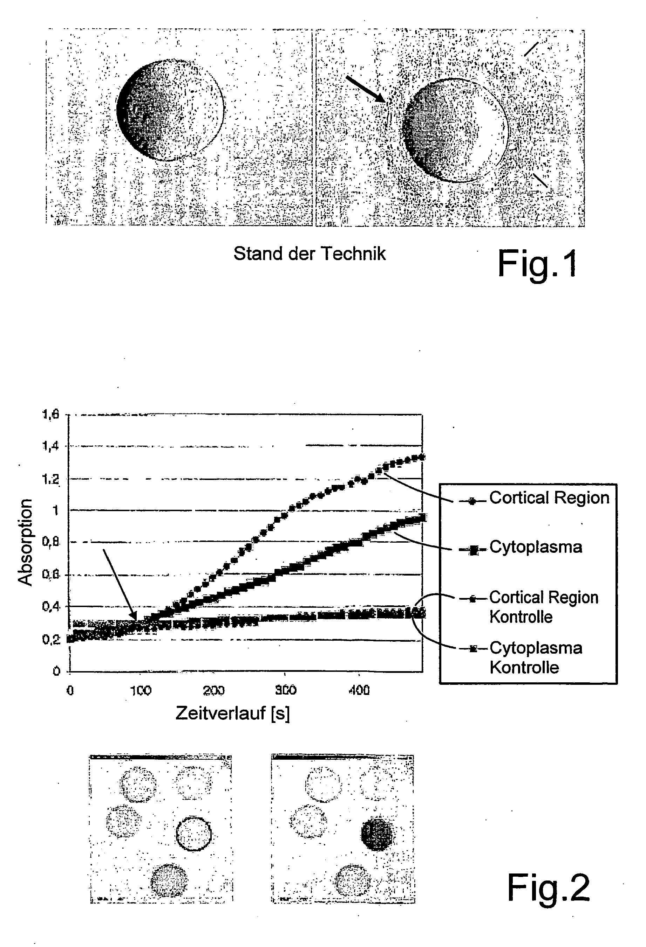

Die **Figur 1** zeigt die natürliche Befruchtung von Seeigeleiern und die Ausbildung einer extrazellulären Befruchtungsmembran. Das linke Bild zeigt in 200facher Vergrößerung das unbefruchtete Ei. Das rechte Bild zeigt in gleicher Vergrößerung das befruchtete Ei mit der ausgehärteten Befruchtungsmembran (Fertilisationsmembran, Pfeil). Die kleinen Striche zeigen die attackierenden Spermien.

Das Verfahren nach der Erfindung wurde an den lebenden Eiern von Seeigeln *(Psammechinus miliaris)* und an den Eiern des sibirischen Störes *(Acipenser baerii)* erprobt. Die Ergebnisse der Aushärtung von ovulierten Eiern wurde anhand von Messungen der Enzymaktivitäten und Morphologie von Seeigeleiern und Störeiern in vivo überprüft.

Wie zuvor ausgeführt, ist die sekundenschnelle Aktivierung des Enzyms Glukose-6-Phosphat Dehydrogenase zur Produktion des Reduktions-äquivalents NADPH für die H₂O₂-Produktion als Substrat für die Ovoperoxidase, Initialzündung zur Eihärtung der Eimembran. Der Anstieg der G6PDH Aktivität lässt sich in lebenden Eiern unter dem Einfluss des exogenen Stimulus messen. Als Nachweis wurde die Tetrazoliumsalz-Methode nach Van Noorden und Fredericks (1992) auf lebende Zellen übertragen. Das bei der Substratumsetzung entstehende NADPH reduziert Tetrazoliumsalz (TNBT) quantitativ in ein bräunliches Reaktionsprodukt, das Formazan. Die Bildung des Reaktionsproduktes wird mit Hilfe von Absorptionsmessungen bei einer Wellenlänge von 585 nm in der Zeit erfasst.

Die **Figur 2** zeigt eine Zeitraffer-Mikroskopie (time-lapse microscopy, Imaging mit Zeiss Axiovert, Axiocam, KS300 Software, Axiovsion Software) der NADPH Produktion in lebenden Seeigeleiern. Der Pfeil zeigt die Applikation des exogenen Stimulus (H₂O₂ 1 % in Seewasser). Die beiden oberen Absorptionskurven in der Kortikalregion (Eirand) und im Zytoplasma (Eiinneres) zeigen nach der Applikation einen deutlichen Anstieg über der Zeit in Sekunden. Es wurde eine Kontrolle ohne exogenen Stimulus durchgeführt. Die beiden unteren Absorptionskurven für die Kortikalregion und das Zytoplasma zeigen keine Veränderung nach der Applikation. Die Messmasken (Messmakro) für die Mikroskopie sind in den beiden unteren Bildern in Figur 2 dargestellt. Das linke Bild zeigt die ringförmige Messmaske für die Kortikalregion, das rechte Bild zeigt die kreisförmige Messmaske für das Zytoplasma. Die Enzymaktivität ist in der Kortikalregion unter der Eimembran am höchsten, da hier der höchste NADPH-Bedarf für den H₂O₂ -Verbrauch besteht. Ein identischer Verlauf der Enzymaktivierung wurde für die Ovoperoxidase nach H₂O₂ -Applikation beobachtet.

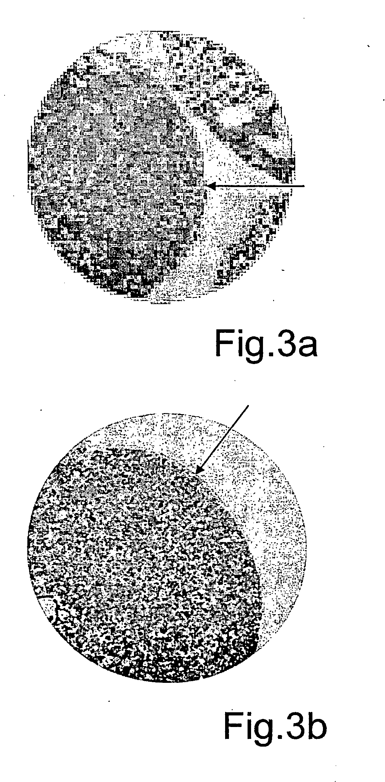

Die **Figur 3a** zeigt ein unbehandeltes ovuliertes Ei des Seeigels ohne Schutzmembran (Vergrößerung 400 x). Die Kortikal Granula liegen locker verteilt an der Eioberfläche und sind nur von einer dünnen, im Lichtmikroskop nicht erkennbaren Vitellinschicht bedeckt. Die **Figur 3b** zeigt ein mit dem Verfahren nach der Erfindung behandeltes Ei mit einer deutlich ausgebildeten Schutzmembran (Pfeil, Vergrößerung 400 x). Der Nachweis erfolgte durch histologische Untersuchungen von Dünnschnitten von fixiertem Eimaterial (4% Bakers Formaldehyd, Einbettung in Epon für TEM, Färbung mit Toluidin Blau) vor und nach der Behandlung mit einem exogenen Aushärtungsmittel nach der Erfindung.

Umfangreiche Versuche an geernteten Eiern vom Stör *(Acipenser baerii)* zeigten, dass das an Seeigeleiern entwickelte Verfahren direkt übertragen werden kann und die die gewünschten Ergebnisse bringt. Die nach der Aushärtung der Eier durchgeführte Konservierung mit Kochsalz und Borax als auch die Shelf Life Versuche über 12 Monate zeigten, dass die Eier stabil bleiben.

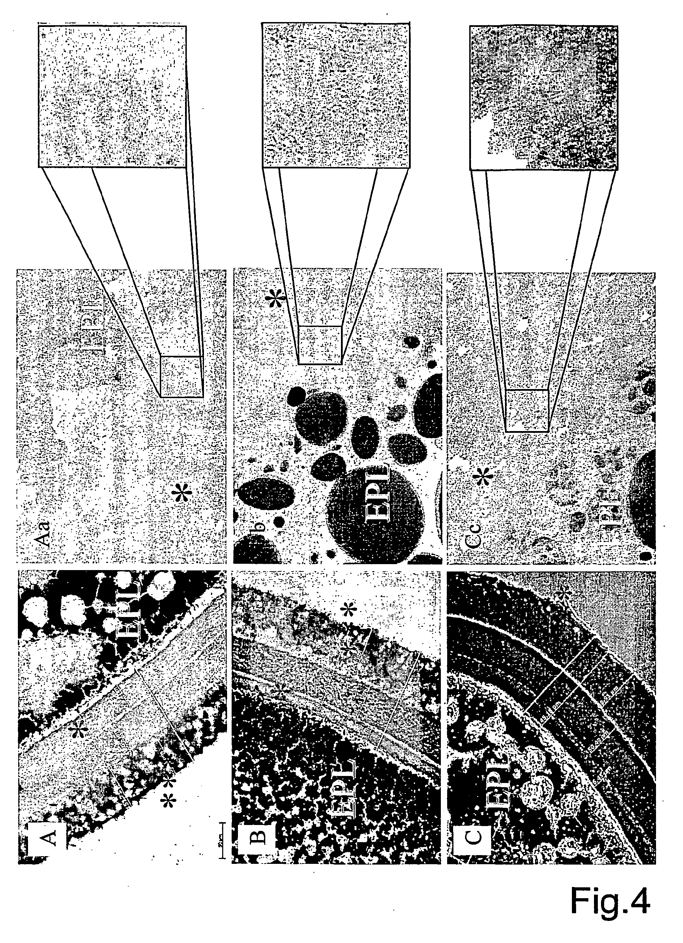

In den **Figuren 4A** bis **C** werden lichtmikroskopische Aufnahmen von H&E gefärbten Cryostat-Schnitten, elektronenmikroskopische Aufnahmen von Ultradünnschnitten von GA- und Osmium fixierten und in Epon eingebetteten Eiern des Störes gezeigt. Die Aufnahmen zeigen die Membranveränderungen von ovulierten Eiern des Störs durch eine Behandlung nach der Erfindung.

Die **Figur 4** **A** zeigt eine lichtmikroskopische Aufnahme eines Schnittes durch ein ovuliertes Störei ohne Behandlung nach der Erfindung. Die das Eiplasma (EPL) umgebende Hülle (durchgezogene Linie) von Störeiern besteht aus mehreren Schichten von Membranen. Die innerste Membran ist mit einem Stern (*), die äußerste Membran (Fertilisationsmembran) ist mit drei Sternen (***) gekennzeichnet. Die **Figur 4Aa** zeigt eine elektronenmikroskopische Aufnahme in 3000facher Vergrößerung im Bereich der innersten Membran (*) und einen Ausschnitt daraus in 12000facher Vergrößerung mit lockeren Tyrosinfaserknäulen.

Die **Figur 4B** zeigt ein mit 115mg/l Kalziumchlorid nach der Erfindung behandeltes ovuliertes Störei. Die **Figur 4Bb** zeigt eine elektronenmikroskopische Aufnahme in 3000facher Vergrößerung und einen Ausschnitt in 12000facher Vergrößerung mit einer Verdichtung durch Tyrosinvernetzung. Die **Figur 4C** zeigt ein mit 0,01 % Wasserstoffperoxid behandeltes ovuliertes Störei. Die **Figur 4Cc** zeigt eine elektronenmikroskopische Aufnahme in 3000facher Vergrößerung und einen Ausschnitt in 12000facher Vergrößerung mit einer Verdichtung zu Strängen durch Tyrosinvernetzung

Deutlich ist im Vergleich der **Figuren 4A** (unbehandelt), **4B** (mit Kalziumchlorid behandelt), **4C** (mit Wasserstoffperoxid behandelt) zu erkennen, dass durch die Behandlung nach der Erfindung die innerste Membran (*) ovulierter Störeier im Durchmesser abnimmt und sich durch Tyrosinvernetzung verdichtet, während die äußerste Membran (***) an Durchmesser zunimmt, aber ebenfalls dichter wird. Die Verdichtung führt zur gewünschten Aushärtung der Eimembran. Durch Dosierung der exogenen Zugaben bezüglich Art, Menge und Dauer kann der Aushärtungsgrad eingestellt werden.

Die **Figuren 5A****...D** zeigen verschiedene Diagramme der Messungen zu den Anteilen der Membranbestandteile an der Gesamtdicke der Membran in % an derzeit handelsüblich erhältlichem Kaviar aus unreifen Eiern **(****Figuren 5A, 5B)** und an ovulierten Eiern **(****Figuren 5C, 5D)** nach der erfindungsgemäßen Behandlung mit Wasserstoffperoxid oder Kalziumchlorid. Die **Figuren 5A** und **5C** zeigen eine Behandlung mit Wasserstoffperoxid H₂O₂ (Behandlung 0: unbehandelt, Behandlung 1: 0,01% Lösung, Behandlung 2: 0,02% Lösung, Behandlung 3: 0,05% Lösung, Behandlung 4: 0,1% Lösung), die Figuren **5B** und **5D** zeigen eine Behandlung mit Kalziumchlorid CaCl₂ H₂O₂ (Behandlung 0: unbehandelt, Behandlung 1:115 mg/l, Behandlung 2: 123 mg/l, Behandlung 3:130 mg/l mit l= pro Liter der Lösung). Das bedeutet, dass die Dosierung der Kalziumionen im mikromolaren Bereich signifikant mehr Kalziumionen enthält soll als im normalen Trink- und Brunnenwasser. Mit "FM" wird die Fertilisationsmembran (Befruchtungsmembran) bezeichnet, die sich ohne eine Befruchtung nur durch eine Behandlung nach der Erfindung ergibt, mit "IM" wird die innere Membran bezeichnet.

Es ist deutlich zu erkennen, dass sich bei einer Behandlung von derzeit handelsüblich erhältlichem Kaviar, d.h. von unreifen Eiern, gemäß der **Figuren 5A** und **5B** keine relevanten Veränderungen in der Membrandicke ergeben, während die Verschiebung der Dickenanteile von innerer Membran auf die gebildete, eine Aushärtung hervorrufenden Fertilisationsmembran bei der Behandlung von ovulierten Eiern nach der Erfindung gemäß **Figuren 5C** und **5D** signifikant ist. Gezeigt sind im die Mediane von jeweils 50 Messungen der inneren Membran (IM) und der äußeren Fertilisationsmembran (FM) mit der Werteverteilung im Vertrauensbereich der 25%-75% Quartale und den Minimal- und Maximalwerten.

## Patentansprüche

1. Verfahren zur Aufbereitung der ovulierten Eier von Wassertieren zu Delikatess-Nahrungsmitteln mit den Verfahrensschritten:
• Erntung der ovulierten Eier ohne schädigenden Eingriff am Wassertier,
• exogene Behandlung der frisch geernteten, ovulierten Eier in einer wässrigen Lösung mit einer Zugabe von den in der Eizelle auch natürlich vorkommenden Signaltransduktions-Molekülen Wasserstoffperoxid und/oder Kalziumchlorid zur physiologischen Stabilisierung der Eimembran durch Ovoperoxidase-Aktivierung und nachfolgend
• Konservierung.

2. Verfahren nach Anspruch 1,
**gekennzeichnet durch**
eine exogene Behandlung der ovulierten Eier in einem Wasserbad mit einer wässrigen Lösung mit einer 0,01; 0,02; 0,05 oder 0,1 prozentigen Zugabe von Wasserstoffperoxid.

3. Verfahren nach Anspruch 2,
**gekennzeichnet durch**
eine exogene Behandlung der ovulierten Eier in einem Wasserbad mit einer wässrigen Lösung mit einer 0,01 prozentigen Zugabe von Wasserstoffperoxid für 1 bis 5 Minuten, wobei die Behandlungsdauer in Abhängigkeit von der gewünschten Härte der behandelten ovulierten Eier festgelegt ist.

4. Verfahren nach einem der Ansprüche 1 bis 3,
**gekennzeichnet durch**
eine exogene Behandlung der ovulierten Eier in einem Wasserbad mit einer wässrigen Lösung mit einer Zugabe von 115 mg/l, 123 mg/l oder 130 mg/l Kalziumchlorid.

5. Verfahren nach Anspruch 4,
**gekennzeichnet durch**
eine exogene Behandlung der ovulierten Eier in einem Wasserbad mit einer wässrigen Lösung mit einer Zugabe von 115 mg/l Kalziumchlorid für 10 bis 20 Minuten, wobei die Behandlungsdauer in Abhängigkeit von der gewünschten Härte der behandelten ovulierten Eier festgelegt ist.

6. Verfahren nach einem der Ansprüche 1 bis 5,
**gekennzeichnet durch**
eine kombinatorische Behandlung der ovulierten Eier in einem Wasserbad mit einer wässrigen Lösung mit einer Zugabe von Wasserstoffperoxid und Kalziumchlorid für 1 bis 20 Minuten, wobei die Behandlungsdauer in Abhängigkeit von der gewünschten Härte der behandelten ovulierten Eier festgelegt ist.

7. Verfahren nach einem der Ansprüche 1 bis 6,
**gekennzeichnet durch**
eine Spülung der ovulierten Eier in physiologischer Kochsalzlösung unter sterilen Bedingungen vor der exogenen Behandlung.

8. Verfahren nach einem der Ansprüche 1 bis 7,
**gekennzeichnet durch**
eine Erntung der ovulierten Eier von lebenden Wassertieren.

9. Verfahren nach einem der Ansprüche 1 bis 8,
**gekennzeichnet durch**
eine Erntung der ovulierten Eier von Speisefischen und Krustentieren.

10. Verfahren nach Anspruch 9,
**gekennzeichnet durch**
eine Erntung der ovulierten Eier vom Stör als Speisefisch zur Herstellung von echtem Kaviar.

11. Mit dem Verfahren gemäß der Ansprüche 1 bis 10 aufbereitete ovulierte Eier von Wassertieren zu Delikatess-Nahrungsmitteln,
**gekennzeichnet durch**
eine ausgehärtete extrazelluläre Außenhaut mit vernetzten Proteinsträngen und irreversibel eingebauten Tyrosin-Molekülen ohne einen Befruchtungszustand.

## Claims

1. Method for preparing the ovulated eggs of aquatic animals to form delicacy foods with the method steps:
• Harvesting the ovulated eggs without a harmful intervention on the aquatic animal,
• Exogenous treatment of the freshly harvested, ovulated eggs in an aqueous solution with addition of the signal transduction molecules hydrogen peroxide and/or calcium chloride, which are also naturally occurring in the egg cell, for the physiological stabilizing of the egg membrane by means of ovoperoxidase activation and, subsequently,
• Conservation.

2. Method according to Claim 1,
**characterized by**
an exogenous treatment of the ovulated eggs in a water bath with an aqueous solution with 0.01; 0.02; 0.05 or 0.1 per cent addition of hydrogen peroxide.

3. Method according to Claim 2,
**characterized by**
an exogenous treatment of the ovulated eggs in a water bath with an aqueous solution with 0,01 per cent addition of hydrogen peroxide for 1 to 5 minutes, wherein the treatment duration is determined as a function of the desired hardness of the treated ovulated eggs.

4. Method according to one of Claims 1 to 3,
**characterized by**
an exogenous treatment of the ovulated eggs in a water bath with an aqueous solution with addition of 115 mg/l, 123 mg/l or 130 mg/l of calcium chloride.

5. Method according to Claim 4,
**characterized by**
an exogenous treatment of the ovulated eggs in a water bath with an aqueous solution with addition of 115 mg/l of calcium chloride for 10 to 20 minutes, wherein the treatment duration is determined as a function of the desired hardness of the treated ovulated eggs.

6. Method according to one of Claims 1 to 5,
**characterized by**
a combinatory treatment of the ovulated eggs in a water bath with an aqueous solution with addition of hydrogen peroxide and calcium chloride for 1 to 20 minutes, wherein the treatment duration is determined as a function of the desired hardness of the treated ovulated eggs.

7. Method according to one of Claims 1 to 6,
**characterized by**
a rinsing of the ovulated eggs in a physiological saline solution under sterile conditions before the exogenous treatment.

8. Method according to one of Claims 1 to 7,
**characterized by**
a harvesting of the ovulated eggs of living aquatic animals.

9. Method according to one of Claims 1 to 8,
**characterized by**
a harvesting of the ovulated eggs of edible fish and crustaceans.

10. Method according to Claim 9,
**characterized by**
a harvesting of the ovulated eggs from sturgeon as edible fish for the production of genuine caviar.

11. Ovulated eggs of aquatic animals prepared with the method according to Claims 1 to 10 to form delicacy foods,
**characterized by**
a hardened extracellular capsule with cross-linked protein strands and irreversibly integrated tyrosine molecules without a fertilization state.

## Revendications

1. Procédé pour traiter les oeufs ovulés d'animaux aquatiques en denrées alimentaires fines comprenant les étapes de procédé suivantes :
• récolte des oeufs ovulés sans intervention préjudiciable sur l'animal aquatique,
• traitement exogène des oeufs fraîchement récoltés dans une solution aqueuse avec une addition de molécules de transduction de signal de peroxyde d'hydrogène et/ou de chlorure de calcium apparaissant également naturellement dans la cellule de l'oeuf pour la stabilisation physiologique de la membrane de l'oeuf par activation de l'ovoperoxydase suivie d'une :
• conservation.

2. Procédé selon la revendication 1,
**caractérisé par**
un traitement exogène des oeufs ovulés dans un bain d'eau avec une solution aqueuse avec une addition de 0,01 ; 0,02 ; 0,05 ou 0,1 pour-cent de peroxyde d'hydrogène.

3. Procédé selon la revendication 2,
**caractérisé par**
un traitement exogène des oeufs ovulés dans un bain d'eau avec une solution aqueuse avec une addition de 0,01 pour-cent de peroxyde d'hydrogène pour 1 à 5 minutes, la durée de traitement étant fixée en fonction de la dureté souhaitée des oeufs ovulés et traités.

4. Procédé selon l'une quelconque des revendications 1 à 3,
**caractérisé par**
un traitement exogène des oeufs ovulés dans un bain d'eau avec une solution aqueuse avec une addition de 115 mg/l, 123 mg/l ou 130 mg/l de chlorure de calcium.

5. Procédé selon la revendication 4,
**caractérisé par**
un traitement exogène des oeufs ovulés dans un bain d'eau avec une solution aqueuse avec une addition de 115 mg/l de chlorure de calcium pour 10 à 20 minutes, la durée de traitement étant fixée en fonction de la dureté souhaitée des oeufs ovulés et traités.

6. Procédé selon l'une quelconque des revendications 1 à 5,
**caractérisé par**
un traitement combinatoire des oeufs ovulés dans un bain d'eau avec une solution aqueuse avec une addition de peroxyde d'hydrogène et de chlorure de calcium pour 1 à 20 minutes, la durée de traitement étant fixée en fonction de la dureté souhaitée des oeufs ovulés et traités.

7. Procédé selon l'une quelconque des revendications 1 à 6,
**caractérisé par**
un lavage des oeufs ovulés dans une solution physiologique de sel de cuisine dans des conditions stériles avant le traitement exogène.

8. Procédé selon l'une quelconque des revendications 1 à 7,
**caractérisé par**
une récolte des oeufs ovulés d'oiseaux aquatiques vivants.

9. Procédé selon l'une quelconque des revendications 1 à 8,
**caractérisé par**
une récolte des oeufs ovulés de poissons comestibles et de crustacés.

10. Procédé selon la revendication 9,
**caractérisé par**
une récolte des oeufs ovulés provenant d'esturgeons comme poisson comestible pour la fabrication de caviar authentique.

11. oeufs ovulés et traités avec le procédé selon l'une quelconque des revendications 1 à 10 d'animaux aquatiques pour fabriquer des denrées alimentaires fines,
**caractérisé par**
une peau extérieure durcie et extracellulaire avec des branches de protéine réticulées et des molécules de tyrosine intégrées de façon irréversible sans un état de fécondation.
